# EUROPEAN PATENT SPECIFICATION

(11) **EP 3 961 338 B1**
(45) Date of publication and mention of the grant of the patent: **03.01.2024**
(21) Application number: 21182379.4
(22) Date of filing: 29.06.2021
(51) Int. Cl.: G05B 23/02, G06N 20/00

(54) **DETECTION OF ABNORMAL BEHAVIOUR OF DEVICES FROM ASSOCIATED UNLABELED SENSOR OBSERVATIONS**
DETEKTION VON ABNORMALEM VERHALTEN VON VORRICHTUNGEN VON ZUGEORDNETEN UNMARKIERTEN SENSORBEOBACHTUNGEN
DÉTECTION DE COMPORTEMENT ANORMAL DE DISPOSITIFS À PARTIR D'OBSERVATIONS DE CAPTEURS ASSOCIÉS NON ÉTIQUETÉS

(30) Priority: 28.08.2020 IN 202021037241
(43) Date of publication of application: 02.03.2022
(73) Proprietor: Tata Consultancy Services Limited, Maharashtra (IN)
(72) Inventor: Chattopadhyay, Tanushyam, 700160 Kolkata, West Bengal (IN); Dutta, Suvra, 700160 Kolkata, West Bengal (IN); Das, Abhisek, 700160 Kolkata, West Bengal (IN); Ghosh, Shubhrangshu, 700160 Kolkata, West Bengal (IN); Misra, Prateep, 700160 Kolkata, West Bengal (IN)
(74) Representative: Goddar, Heinz J.

(56) References cited:
- GB-A- 2 567 850
- US-A1- 2018 019 910
- US-A1- 2019 379 589

## Description

### CROSS-REFERENCE TO RELATED APPLICATIONS AND PRIORITY

The present application claims priority to Indian application, Application No. 202021037241, filed in India on August 28, 2020.

### TECHNICAL FIELD

The disclosure herein generally relates to analysis of unlabeled sensor observations, and, more particularly, to detection of abnormal behaviour of devices from associated unlabeled sensor observations.

### BACKGROUND

In an industry plant or loT networks, major failure occurs because of the failure in wear of the components of a device. The mass of the components decreases as the device is going to degrade or lose its useful life. Therefore, detecting the time when the device is going to fail in real time is a real challenge given the associated constraints and requirements. However, due to absence in any supporting information or annotated data, traditional machine learning (ML) approaches have failed to detection abnormality in devices.

GB 2 567 850 A discloses context vectors generated from an auto encoder and used to create clusters representing different classifications of the system operating states.

### SUMMARY

Embodiments of the present disclosure present technological improvements as solutions to one or more of the above-mentioned technical problems recognized by the inventors in conventional systems. In one aspect, there is provided a processor implemented method for detecting abnormal behaviour of devices from associated unlabeled sensor observations according to independent claim 1.

In an embodiment, the step of optimizing one or more hyper parameters of the stacked auto-encoder comprises iteratively fine-tuning the one or more hyper parameters based on the windowed dataset such that a reconstruction error reaches a pre-defined threshold.

In an embodiment, the clustering technique is a density-based clustering technique.

In an embodiment, the at least one cardinality is indicative of the operating status comprises one of a success, a failure, or a transition state.

In an embodiment, the transition state comprises a probability of a change in a first transition state to a second transition state that is different from the first transition state.

In an embodiment, the first transition state and the second transition state are one of a success state or a failure state at one or more time instances of the plurality of time instances.

In another aspect, there is provided a system for detecting abnormal behaviour of devices from associated unlabeled sensor observations according to independent claim 7.

In an embodiment, the one or more hyper parameters of the stacked auto-encoder are optimized by iteratively fine-tuning the one or more hyper parameters based on the windowed dataset such that a reconstruction error reaches a pre-defined threshold.

In an embodiment, the clustering technique is a density-based clustering technique.

In an embodiment, the at least one cardinality is indicative of the operating status comprises one of a success, a failure, or a transition state.

In an embodiment, the transition state comprises a probability of a change in a first transition state to a second transition state that is different from the first transition state.

In an embodiment, the first transition state and the second transition state are one of a success state or a failure state at one or more time instances of the plurality of time instances.

In yet another aspect, there is provided a computer program product according to independent claim 13.

In an embodiment, the step of optimizing one or more hyper parameters of the stacked auto-encoder comprises iteratively fine-tuning the one or more hyper parameters based on the windowed dataset such that a reconstruction error reaches a pre-defined threshold.

In an embodiment, the clustering technique is a density-based clustering technique.

In an embodiment, the at least one cardinality is indicative of the operating status comprises one of a success, a failure, or a transition state.

In an embodiment, the transition state comprises a probability of a change in a first transition state to a second transition state that is different from the first transition state.

In an embodiment, the first transition state and the second transition state are one of a success state or a failure state at one or more time instances of the plurality of time instances.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts a system for detecting abnormal behaviour of devices from associated unlabeled sensor observations, in accordance with an embodiment of the present disclosure.
FIG. 2 depicts an exemplary flow chart illustrating a method for detecting abnormal behaviour of devices from associated unlabeled sensor observations, using the system of FIG. 1, in accordance with an embodiment of the present disclosure.
FIG. 3 depicts key performance indicators (KPI) computed as a ratio of current per RPM, using the system of FIG. 1, in accordance with an example embodiment of the present disclosure.
FIG. 4 depicts a plurality of clusters obtained based on the set of embeddings with reduced dimension serving as an input to a clustering technique implemented by the system of FIG. 1, in accordance with an example embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Conventionally, detecting time when a device is going to fail in real time has been a real challenge given the associated constraints and requirements. Due to absence in any supporting information or annotated data, traditional approaches have failed to detection abnormality in devices. Present disclosure provide systems and methods for detecting abnormal behaviour of a device from associated unlabeled sensor observations wherein KPIs are computed based on unlabeled sensor observations of at least two sensor parameters and windowing technique is applied on modified dataset to obtain windowed dataset based on which hyper-parameters of deep learning-based auto-encoder are optimized to obtain set of embeddings. Dimensionality reduction technique is applied on the embeddings to obtain embeddings with reduced dimension. Density based clustering technique with hyper-parameters is applied on embeddings with reduced dimension and cluster(s) for unlabeled sensor observations are obtained. Cardinality is assigned to cluster(s) to predict abnormal behaviour of the device. The cardinality is further indicative of operating status of the device comprises one of a success, a failure, or a transition state (e.g., success state to failure state and vice versa).

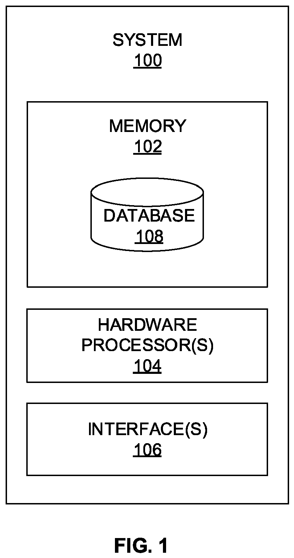

Referring now to the drawings, and more particularly to FIGS. 1 through 4, where similar reference characters denote corresponding features consistently throughout the figures, there are shown preferred embodiments and these embodiments are described in the context of the following exemplary system and/or method.

FIG. 1 depicts a system 100 for detecting abnormal behaviour of devices from associated unlabeled sensor observations, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises unlabeled sensor observations captured by one or more sensors attached to various equipment/ (or devices). The database 108 further stores key performance indicators (KPIs) computed based on the unlabeled sensor observations, modified dataset obtained based on KPIs, windowed dataset obtained from the modified dataset, information on one or more hyper-parameters of a deep learning-based auto-encoder being optimized, optimum encoder hyper-parameters serve as one or more corresponding embeddings, set of embeddings with reduced dimension, one or more clusters pertaining to the unlabeled sensory observations, reconstruction error of a deep learning-based auto-encoder, pre-defined threshold and the like. The database 108 further stores the operating status of the device such as success, failure, and various transition states.

The information stored in the database 108 further comprises various techniques such as clustering technique(s) as known in the art, windowing technique(s) as known in the art, deep learning based stacked auto encoder such as recurrent neural network, Long Short Term Memory and the like. The above-mentioned techniques and auto encoders comprised in the memory 102/database 108 are invoked as per the requirement by the system 100 to perform the methodologies described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

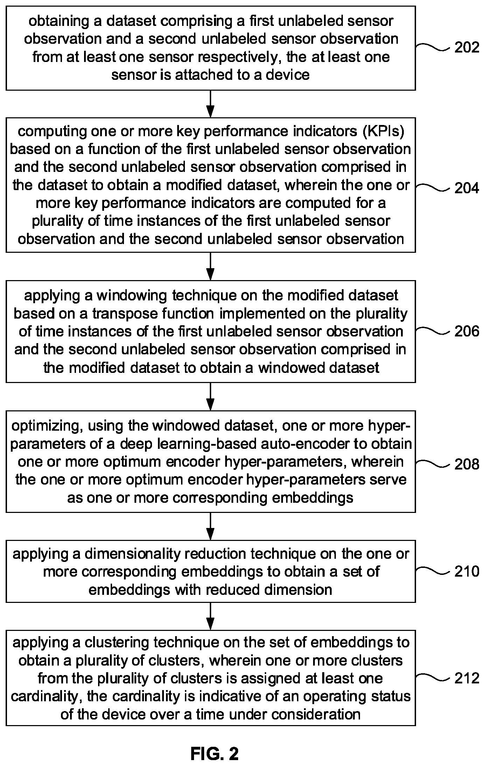

FIG. 2, with reference to FIG. 1, depicts an exemplary flow chart illustrating a method for detecting abnormal behaviour of devices from associated unlabeled sensor observations, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2. In an embodiment, at step 202 of the present disclosure, the one or more hardware processors 104 obtain a dataset comprising a first unlabeled sensor observation and a second unlabeled sensor observation from at least one sensor respectively, the at least one sensor is attached to a device. Consider that a first unlabeled sensor observation is current (in amperes) consumed by the device (e.g., say water pump), and a second unlabeled sensor observation is revolutions per minute (RPM) noted/captured for that water pump. The current consumed by the device and revolutions per minute (RPM) serve as time series data/sensor data captured by one or more corresponding sensors. Say, the dataset is in an input file (e.g., such as word processing document), wherein the unlabeled sensor observations (e.g., the first unlabeled sensor observation and the second unlabeled sensor observation) are represented in one or more rows for various time instance. In other words, each row in the input file represents sensor observations at a specific instance of time (e.g., say for each second or every 1 second). Below Table 1 is an exemplary dataset comprising the first unlabeled sensor observation (current in amperes) and the second unlabeled sensor observation (frequency in Hertz (Hz)) from one or more sensors attached to one or more devices (e.g., 4 water pumps, namely Pump A, Pump B, Pump C (for sake of brevity not shown - but to be assumed), and Pump D):

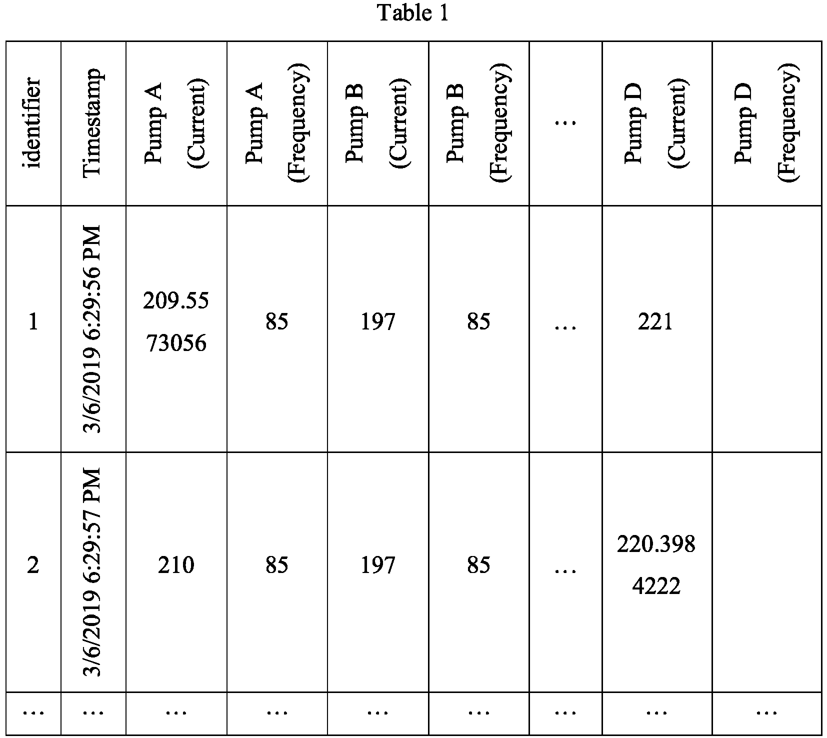

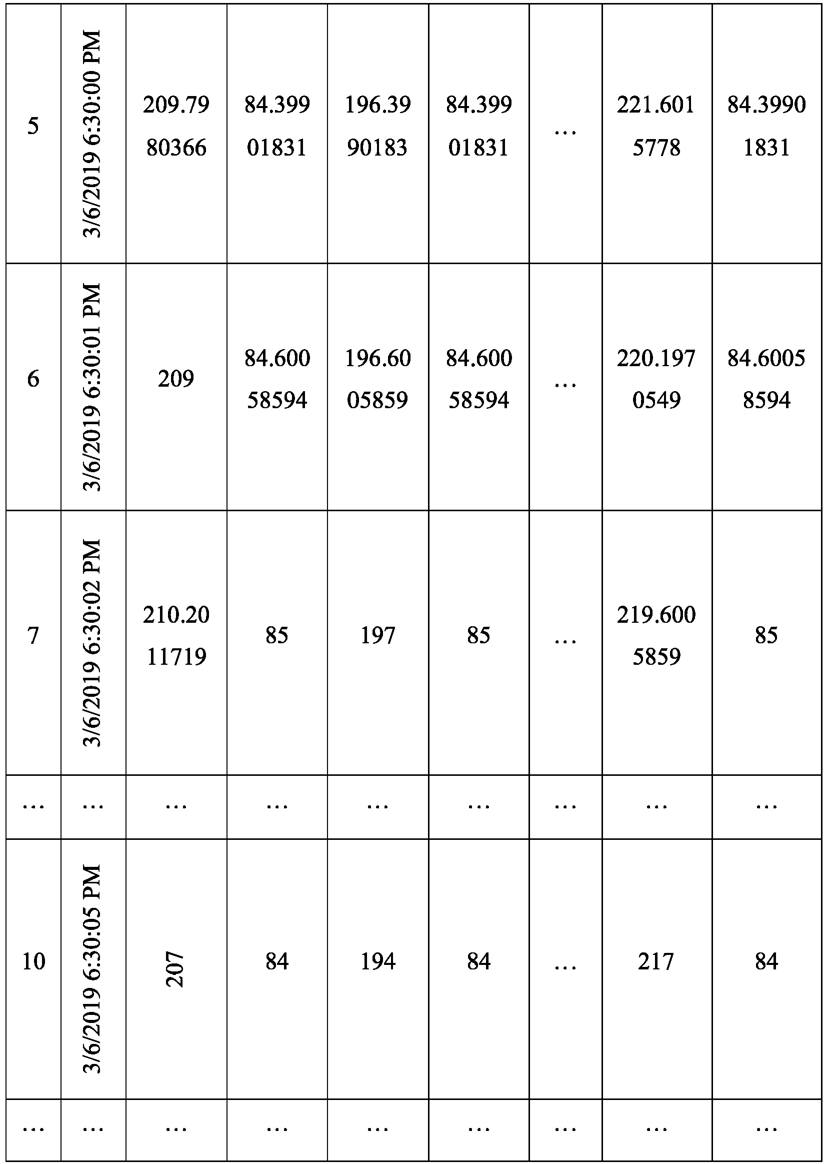

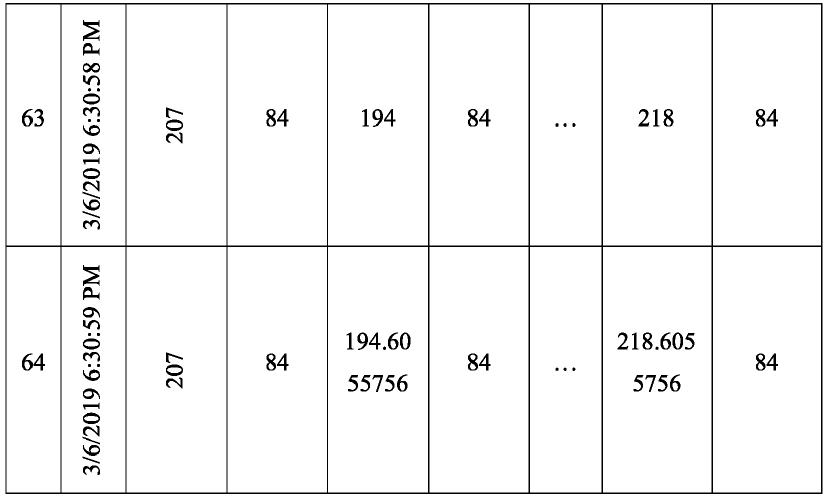

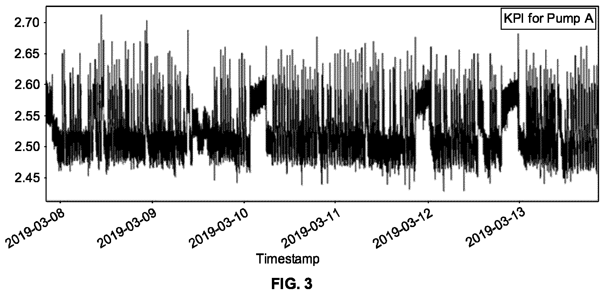

In an embodiment, at step 204 of the present disclosure, the one or more hardware processors 104 compute one or more key performance indicators (KPIs) based on a function of the first unlabeled sensor observation and the second unlabeled sensor observation comprised in the dataset to obtain a modified dataset. In an embodiment, the one or more key performance indicators are computed for a plurality of time instances of the first unlabeled sensor observation and the second unlabeled sensor observation. For example, KPI is computed as a ratio of current per RPM, in one embodiment of the present disclosure. FIG. 3, with reference to FIGS. 1 and 2, depicts key performance indicators (KPI) computed as a ratio of current per RPM, using the system 100 of FIG. 1, in accordance with an example embodiment of the present disclosure. The KPI computed is represented in the form of timeseries data as depicted in FIG. 3, in one example embodiment. This knowledge of what KPI is or can be computed may be via user input (e.g., a domain expert), in one example embodiment. So, two sensor data namely current consumed by it and the RPM noted for that pump and KPI is computed for each of them. Below table 2 depicts an exemplary windowed dataset with KPIs computed.

**Table 2**

| Identifier | Timestamp | Key Performance Indicator (KPIs) |
|---|---|---|
| 1 | 3/6/2019 6:29:56 PM | 2.6 |
| 2 | 3/6/2019 6:29:57 PM | 2.592922615 |
| ... | ... | ... |
| 5 | 3/6/2019 6:30:00 PM | 2.609000192 |
| 6 | 3/6/2019 6:30:01 PM | 2.595733629 |
| 7 | 3/6/2019 6:30:02 PM | 2.595301011 |
| ... | ... | ... |
| 10 | 3/6/2019 6:30:05 PM | 2.590483166 |
| ... | ... | ... |
| 63 | 3/6/2019 6:30:58 PM | 2.595238095 |
| 64 | 3/6/2019 6:30:59 PM | 2.602447328 |

In an embodiment, at step 206 of the present disclosure, the one or more hardware processors 104 apply a windowing technique on the modified dataset based on a transpose function implemented on the plurality of time instances of the first unlabeled sensor observation and the second unlabeled sensor observation comprised in the modified dataset to obtain a windowed dataset. The windowing technique (also referred as 'window technique and interchangeably used herein, is comprised in the memory 102 and invoked for execution as required by the system 100 of the present disclosure. For example, in the present disclosure out of the entire dataset, rows 0 to 31 (i.e., 32 rows) were taken. And these rows were transposed to create new row 0 with 32 columns. Thus, one row, representing a window of size 32, was created. Process was repeated for remaining rows as well. The above description is better understood by way of the following exemplary description. Say, the dataset is in an input file (e.g., such as word processing document), wherein the unlabeled sensor observations (e.g., the first unlabeled sensor observation and the second unlabeled sensor observation) are represented in one or more rows for various time instance. In other words, each row in the input file represents sensor observations at a specific instance of time (e.g., say for each second or every 1 second). Now the decision is needed to be taken on a minute basis and so 60 such rows are transposed to form columns of these unlabeled sensor observations. Thus if 18,000 data rows with one KPI column were there in the dataset, after transposing it 300 rows with 60 columns are obtained (e.g., also referred as 300 data points with 60-dimensional vector). Below Table 3 depicts an exemplary windowed dataset as outputted in step 206, provided by way of example:

**Table 3**

| Window | 1 | 2 | 3 | ... | 31 | 32 |
|---|---|---|---|---|---|---|
| 1 | 2.6 | 2.592922615 | 2.59531268 | ... | 2.607142857 | 2.595771621 |
| 2 | 2.609361357 | 2.627951459 | 2.591150135 | ... | 2.595238095 | ... |

In an embodiment, at step 208 of the present disclosure, the one or more hardware processors 104 optimize, using the windowed dataset, one or more hyper-parameters of a deep learning-based auto-encoder to obtain one or more optimum encoder hyper-parameters (also referred as hyper-parameters and interchangeably used herein), wherein the one or more optimum encoder hyper-parameters serve as one or more corresponding embeddings. The deep learning-based auto-encoder is one of a recurrent neural network(s) or a long short-term memory (LSTM) network/encoder, and the like. The deep learning-based auto-encoder is comprised in the memory 102 and invoked for execution as required by the system 100 of the present disclosure. In the present disclosure LSTM Encoder decoder has been used to find the optimum encoder parameters (e.g., the one or more optimum encoder hyper parameters) for which the reconstruction error is minimized. The step of optimizing the one or more hyper parameters of the stacked auto-encoder comprises iteratively fine-tuning the one or more hyper parameters based on the windowed dataset such that a reconstruction error reaches a pre-defined threshold. Examples of the one or more hyper-parameters include but are not limited to learning rate iteration, early exaggeration, and the like. Reconstruction error can be better understood by way of following exemplary description. In the present disclosure, whenever any deep learning (DL) based encoder is applied on a time series (TS) the goal has been to learn the TS from itself. Hence the input to the encoder of the deep learning-based auto-encoder is the TS and subsequently that encoded stream becomes the input for a Decoder of the deep learning-based auto-encoder. Output of the decoder is the time series again. Now the difference between the original and the decoder TS is known as the reconstruction error. So, it is required to tune the above-mentioned hyper parameters so that the reconstruction error is minimized. The threshold has been computed on a statistics-based approach and it varies for different use cases, in one example embodiment of the present disclosure. Now that the one or more optimum encoder hyper-parameters are obtained these are further use to encode the time series/unlabeled sensor observations. Moreover, these embeddings represent the 60-dimensional vector into another new dimensional vector space. This step is used for extract features from the time series without using domain expertise of a signal processing expert. For instance, the hyper-parameters were applied on an input 60 column vector to output a 32-dimensional vector.

In an embodiment, at step 210 of the present disclosure, the one or more hardware processors 104 apply a dimensionality reduction technique on the one or more corresponding embeddings (e.g., 32-dimensional vector) to obtain a set of embeddings with reduced dimension. In the present disclosure, the dimensionality reduction technique is comprised in the memory 102 such dimensionality reduction technique is one of a principle component analysis (PCA) technique or a Uniform Manifold Approximation and Projection (UMAP) technique as known in the art. In the present disclosure, UMAP technique was used to reduce this feature vector (e.g., 32-dimensional vector) to a lower 2 or 3-dimensional data. UMAP technique helps to plot in 2/3 dimension so that data can be visualized. Descriptive analytics plays an important role for management, but users cannot visualize any vector beyond 3-dimension. Moreover, some of the conventional clustering algorithms/techniques cannot work on high dimension and hence UMAP technique to reduce the dimension and obtain the set of embeddings with reduced dimension. Below Table 4 depicts an exemplary value for the set of embeddings with reduced dimension, provided by way of example:

**Table 4**

| | X_0 | X_1 |
|---|---|---|
| 0 | -1.0265474 | -2.681749 |
| 1 | -1.1274452 | 1.6927222 |
| 2 | -3.023633 | 2.503603 |
| 3 | -0.5936756 | 0.24637656 |
| 4 | 0.9676664 | -3.1254356 |
| 5 | 0.6661351 | -2.6700094 |
| 6 | -2.5043266 | -1.3739654 |
| 7 | -0.86100155 | 0.47663715 |
| 8 | -0.48133633 | 1.6670678 |
| 9 | -3.9000165 | 1.049104 |
| 10 | 0.47728086 | 3.3720694 |
| ... | ... | ... |
| 50 | 1.2877359 | -2.4370077 |
| 51 | 0.7135229 | -0.2074219 |
| 52 | 0.024096811 | 2.7424657 |
| 53 | -0.51461816 | 2.8483796 |
| 54 | -2.2853856 | 5.8992887 |

In an embodiment, at step 212 of the present disclosure, the one or more hardware processors 104 apply a clustering technique on the set of embeddings to obtain a plurality of clusters. In an embodiment, the clustering technique is a density-based clustering technique such as HDBSCAN clustering technique as known in the art. In an embodiment, one or more clusters from the plurality of clusters are assigned at least one cardinality wherein the cardinality is indicative of an operating status of the device over a time under consideration. In an embodiment, the at least one cardinality indicative of the operating status comprises one of a success, a failure, or a transition state. The transition state comprises a probability of a change in a first transition state to a second transition state wherein the second transition state is different from the first transition state. Alternatively, the transition state comprises a probability of a change from a first transition state to a second transition state wherein the second transition state is different from the first transition state. In an embodiment, the first transition state and the second transition state are one of a success states or a failure state at one or more time instances of the plurality of time instances. For instance, if the first transition state is success state then the second transition state is considered as a failure state. Similarly, if the first transition state is failure state then the second transition state is considered as a success state.

The system 100 implements/has implemented density-based clustering technique such as the HDBSCAN clustering technique as known in the art since the HDBSCAN clustering technique can automatically detect an optimum cluster size for a given dataset (e.g., dataset of step 102). The density-based clustering technique such as the HDBSCAN clustering technique is comprised in the memory 102 and invoked for execution as required by the system 100 of the present disclosure. More specifically, the HDBSCAN clustering technique has an automatic hyper-parameter training to find the best hyper-parameter combination and uses that for the clustering. Further, HDBSCAN clustering technique gives the user specified clustering quality metrics and the ideal number of the clusters by virtue of the algorithm. Besides hard-clustering assignment and scores, it also gives the soft clustering probability of the data-points/unlabeled sensor observations for their respective hard-clustering assignment. It also gives the sample silhouette values for each data-point. The present disclosure has implemented an optimization technique on two parameters namely silhouette coefficients and the soft clustering probability decided upon the number of clusters to obtain a plurality of clusters based on the set of embeddings with reduced dimension. a Steel Plant pump is being discussed as a use case. In the method of the present disclosure, the silhouette coefficient (SC) has been used to find the ratio of inter cluster and intra cluster. A curve is obtained when the number of clusters are plotted as x axis and the SC as y axis and the optimal point is used hereafter as 'S'. The curve plot is not shown in figures by the embodiments of the present disclosure. By determining the optimal number of clusters, number of states of the pump can be determined, such states for example, comprise but are not limited to: normal, starting to malfunction, malfunctioning, repaired, and the like. Some of the hyper parameters of the HDBSCAN clustering technique considered by the system 100 and the method of the present disclosure for the device as a water pump are described below by way of examples:
1. min_cluster_size: Minimum size of clusters.
2. min_samples: Number of samples/unlabeled sensor observations in a neighbourhood for a specific unlabeled sensor observation/point to be considered as a core point.
3. metric: The metric to use when calculating distance between instances in a feature array. If metric is "precomputed", X is assumed to be a distance matrix and must be square. Multiple values such as `Euclidean, Manhattan' can be specified for the tuning purpose. These are all hyper-parameters of HDBSCAN clustering algorithm. Euclidian and Manhattan are the distance metric. There is a flexibility for one or more entities (e.g., users, system(s), and the like.) to use the distance metric. Default setting uses Euclidean distance, in one example embodiment of the present disclosure.
4. algorithm: HDBSCAN has variants specialized for different characteristics of the data. By default, this is set to best which chooses the "best" algorithm given the nature of the dataset. Other options can also be fitting or configured into the system 100 and evaluated for performance. Such other options can include but are not limited to generic, prims_kdtree, prims_balltree, boruvka_kdtree, boruvka_balltree, and the like. Multiple values like best, generic, prims_kdtree, and the like can be specified for the tuning purpose.
5. gen_min_span_tree: Whether to generate the minimum spanning tree with regard to mutual reachability distance for later analysis. These are all hyper-parameters of HDBSCAN clustering algorithm/technique, in one example embodiment of the present disclosure.
6. scoring_param_names: Defaults to silhouette_score, calinski_harabasz_score, and the like. The name of the scoring parameters is used to measure the quality of the clusters being outputted.
7. scoring_param_for_best_cluster_selection: Defaults to silhouette_score - the name of the scoring parameter to be used for the best clustering selection during the hyper-parameter tuning. It must be one of the members of 'scoring_param_names' property.

Therefore, by applying the above-mentioned one or more hyper-parameters (e.g.., refer above 7 points) for the HDBSCAN clustering technique by the system 100, a plurality of clusters are obtained based on the set of embedding with reduced dimension, in one example embodiment of the present disclosure. The ability of the system 100 to reduce the number of features or set of embeddings to 2- or 3-dimension vector (e.g., also referred as set of embeddings with reduced dimension) enables to the system 100 to optimize computational power thereby improving system performance. In other words, the system 100 utilizes 2- or 3-dimension vector (e.g., also referred as set of embeddings with reduced dimension) as an input to the density-based clustering technique, the system 100 requires less computing power to performing clustering and obtain one or more clusters specific to the unlabeled sensor observations (e.g., first unlabeled sensor observation and second unlabeled sensor observation).

For instance, during the experiments conducted by present disclosure, the system 100 and method utilized the following a subset of the above hyper-parameters for obtaining the plurality of clusters based on the set of embedding with reduced dimension, provided by way of example:
a. min_cluster_size: Ideally this is a relatively intuitive parameter to select - it can be set of the smallest size grouping to consider a cluster.
b. min_samples: This parameter has high impact on the clustering. The larger the value of this parameter makes the clustering more conservative i.e., more points/unlabeled sensor observations would be declared as noise and clusters are being restricted to progressively more dense areas.
c. scoring_param_for_best_cluster_selection: This represents the metric to be used for selecting the best cluster. One possible such parameter may be Silhouette coefficient.

Further, the system 100 generates at least one alert based on the at least one cardinality assigned to the one or more clusters of the plurality of clusters. Example of clusters or cluster labels can be 0, 1 and 2. In the present disclosure, the clusters obtained included cluster labels 0, -1 and the like. Below Table 5 depicts an exemplary set of clusters/cluster labels obtained for the set of embeddings with reduced dimension for the first and second unlabeled sensor observations for the various devices (e.g., Pump A, Pump B (for sake of brevity not shown - but values assumed), Pump C (for sake of brevity not shown - but values assumed), and Pump D), provided by way of example:

**Table 5**

| Reference ID | Start point | End point | Pump A (Current) | Pump A (Frequency) | ... | Pump D (Current) | Pump D (Frequency) | Cluster label |
|---|---|---|---|---|---|---|---|---|
| 3232 | 3136 | 3360 | 23 | 46.63 | ... | 164.7008362 | 67.35041809 | -1 |
| 10784 | 10688 | 10912 | 29 | 38.63 | ... | 181.8068542 | 76 | -1 |
| 13504 | 13408 | 13632 | 14 | 58.63 | ... | 171 | 70 | 0 |
| 18016 | 17920 | 18144 | 30 | 10.63 | ... | 210.2291565 | 88 | -1 |
| 20448 | 20352 | 20576 | 10 | 42.63 | ... | 200.2291565 | 84 | -1 |
| 21120 | 21024 | 21248 | 21 | 54.63 | ... | 169.5855865 | 69 | 0 |
| 34080 | 33984 | 34208 | 57 | 54.63 | ... | 160.6025848 | 65 | -1 |
| ... | ... | ... | ... | ... | ... | ... | ... | ... |
| 45600 | 45504 | 45728 | 9 | 54.63 | ... | 1 | 0 | -1 |
| 45632 | 45536 | 45760 | 10 | 26.63 | ... | 1 | 0 | 0 |
| 45664 | 45568 | 45792 | 10 | 58.63 | ... | 1 | 0 | 0 |
| 45696 | 45600 | 45824 | 11 | 30.63 | ... | 1 | 0 | 0 |
| 45728 | 45632 | 45856 | 12 | 2.63 | ... | 1 | 0 | 0 |

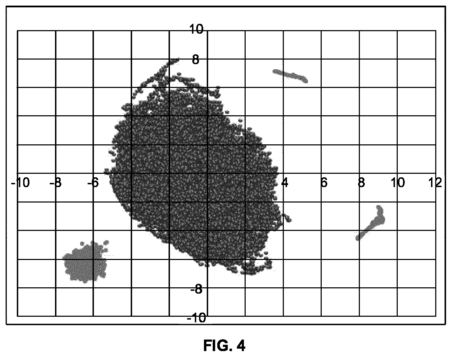

In the experiment conducted by the present disclosure for the water pump, for anomaly detection (depicting an abnormal behavior) the present disclosure relied upon an observation that majority of the data is belonging to the class success. Based on the experiments, it was found that the cardinality for class 1 is 98% (densely population dots in FIG. 4). These were marked as success. FIG. 4, with reference to FIGS. 1 through 3, depicts operating status of the device based on the first unlabeled sensor observation and the second unlabeled sensor observation captured by the at least one sensor, in accordance with an example embodiment of the present disclosure.

As can be realized that once a pump/machine fails or attains a failure operating status it always consumes some time to recover to its healthy condition. So, the class 0, which has almost 1 hour(s) of consecutive data points belonging to that class is labelled as failure.

Another class is for some abnormal points (e.g., unlabeled sensor observations) which indicates the possibility of failure to success or success to failure transitions. These values are marked to generate an alarm based on its previous class. For example, if these points/unlabeled sensor observations are obtained when the machine is in healthy state, then an alarm is set by the system 100. It is to be understood by a person having ordinary skill in the art or person skilled in the art that there may be no requirement to raise an alarm if the device/machine/water pump is changing from failure transition state to success/good transition state. It is to be further understood by a person having ordinary skill in the art or person skilled in the art that though the present disclosure implements systems and methods for abnormal behaviour detection, the system and method described herein can also be implemented for determining health index of a device, remaining useful life (RUL) of the device and its associated components, and the like and such implementation shall not be construed as limiting the scope of the present disclosure.

### Experimental results:

Key performance index (KPI) was computed with the feedback from the domain expert. In a typical realization of pump failure in a steel plant such KPI may be computed as a ratio of current and frequency. A group of consecutive samples presented as consecutive rows in the input .CSV file was considered as window of time series data/unlabeled sensor observations specific to 4 devices (e.g., 4 water pumps, with each water pump having at least 2 sensors or at least one sensor capable of providing 2 distinct sensor values such as current and frequency). In the present disclosure, experiments were conducted by the system 100 and the method using 32 and 64 window size. Each window consisting of, say 32 samples/unlabeled sensor observation, was considered as an input feature vector/ unlabeled sensor observation(s) of 32 dimension. 7 days data 19000 such windows were obtained. LSTM auto encoder was used to get an embedding of these windows into a higher dimension of say 60 and similar LSTM decoder was used to reconstruct the time series of the unlabeled sensor observations. The point wise error between original and embedded data was minimized. Once the training was over, the hidden state of the LSTM was extracted for which the reconstruction error was observed to be optimum. Encoder with best model was then used to get a set of embedding and these embeddings were used features. Uniform Manifold Approximation and Projection (UMAP) was used for dimensionality reduction and the number of features were reduced to 2- or 3-dimension vector in prior to applying clustering technique such as density based clustering on lower dimension so as to clearly visualize separation between the clusters. In other words, the set of embeddings with reduced dimension were clustered to obtain a plurality of clusters using HDBSCAN clustering technique wherein three distinct clusters were observed (e.g., refer FIG. 4). As mentioned above, the ability of the system 100 to reduce the number of features or set of embeddings to 2- or 3-dimension vector (e.g., also referred as set of embeddings with reduced dimension) enables to the system 100 to optimize computational power thereby improving system performance. Since the system 100 utilizes 2- or 3-dimension vector (e.g., also referred as set of embeddings with reduced dimension) as an input to the density-based clustering technique, the system 100 requires less computing power.

Assumption was made by the system and method of the present disclosure to mark normal set of points. As it is intuitive that most of the data is normal in a plant, the cluster with highest cardinality was marked as the normal (e.g., refer FIG. 4). More specifically, FIG. 4, with reference to FIGS. 1 through 3, depicts a plurality of clusters obtained based on the set of embeddings with reduced dimension serving as an input to a clustering technique implemented by the system 100 of FIG. 1, in accordance with an example embodiment of the present disclosure.

As mentioned above, it was observed that second cluster of points contained consecutive window identifier and thus time stamp and that cluster was marked as the failure. The third cluster is indicative of the points of transition of degrading from good condition to fail and the reverse.

Once a model has been built it can be used in a device such as an edge device to respond in real time. For instance, once unlabeled sensor observations are obtained from the sensors attached with the device or machine parts, a similar window of 32 samples can be accumulated. KPI can be further computed as per the domain knowledge provided by the expert. The already set parameters can be used to obtain the embedding using the LSTM encoder. UMAP can be used to reduce the feature into lesser dimension and then a clustering technique can be applied on the reduced dimension feature set to obtain one or more clusters. Further alerts are generated based on cardinality assigned to the clusters wherein the alerts are communication via any communication channel (e.g., ZigBee^{®} or https) as known in the art to an operator (e.g., a user, administrator) to acquire data from sensors for further processing and analysis.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method for detecting abnormal behaviour of devices from unlabeled sensor observations pertaining to the devices, comprising:
obtaining, via one or more hardware processors, a dataset comprising a first unlabeled sensor observation and a second unlabeled sensor observation from at least one sensor respectively, the at least one sensor is connected to a device (202) and the at least one sensor captures sensor observation pertaining to the device;
computing, via the one or more hardware processors, one or more key performance indicators (KPIs) based on a function of the first unlabeled sensor observation and the second unlabeled sensor observation comprised in the dataset to obtain a modified dataset, wherein the one or more key performance indicators are computed for a plurality of time instances of the first unlabeled sensor observation and the second unlabeled sensor observation (204);
applying, via the one or more hardware processors, a windowing technique on the modified dataset based on a transpose function implemented on the plurality of time instances of the first unlabeled sensor observation and the second unlabeled sensor observation comprised in the modified dataset to obtain a windowed dataset (206);
optimizing via the one or more hardware processors, using the windowed dataset, one or more hyper-parameters of a deep learning-based auto-encoder to obtain one or more optimum encoder hyper-parameters, wherein the one or more optimum encoder hyper-parameters serve as one or more corresponding embeddings (208);
applying, via the one or more hardware processors, a dimensionality reduction technique on the one or more corresponding embeddings to obtain a set of embeddings with reduced dimension (210);
applying via the one or more hardware processors, a clustering technique on the set of embeddings to obtain a plurality of clusters, wherein one or more clusters from the plurality of clusters is assigned at least one cardinality, the cardinality is indicative of an operating status of the device over a time under consideration (212); and
generating, via the one or more hardware processors, at least one alert based on the at least one cardinality assigned to the one or more clusters of the plurality of clusters, wherein the alert is communicated via a communication channel to an operator to acquire data from at least the one sensor for further processing and analysis.

2. The processor implemented method of claim 1, wherein the step of optimizing one or more hyper parameters of the stacked auto-encoder comprises iteratively fine-tuning the one or more hyper parameters based on the windowed dataset such that a reconstruction error reaches a pre-defined threshold.

3. The processor implemented method of claim 1, wherein the clustering technique is a density-based clustering technique.

4. The processor implemented method of claim 1, wherein the at least one cardinality indicative of the operating status comprises one of a success, a failure, or a transition state.

5. The processor implemented method of claim 4, wherein the transition state comprises a probability of a change in a first transition state to a second transition state that is different from the first transition state.

6. The processor implemented method of claim 5, wherein the first transition state and the second transition state are one of a success state or a failure state at one or more time instances of the plurality of time instances.

7. A system (100) for detecting abnormal behaviour of devices from unlabeled sensor observations pertaining to the devices, comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
obtain a dataset comprising a first unlabeled sensor observation and a second unlabeled sensor observation from at least one sensor respectively, the at least one sensor is connected to a device and the at least one sensor captures sensor observation pertaining to the device;
compute one or more key performance indicators (KPIs) based on a function of the first unlabeled sensor observation and the second unlabeled sensor observation comprised in the dataset to obtain a modified dataset, wherein the one or more key performance indicators are computed for a plurality of time instances of the first unlabeled sensor observation and the second unlabeled sensor observation;
apply a windowing technique on the modified dataset based on a transpose function implemented on the plurality of time instances of the first unlabeled sensor observation and the second unlabeled sensor observation comprised in the modified dataset to obtain a windowed dataset;
optimize, using the windowed dataset, one or more hyper-parameters of a deep learning-based auto-encoder to obtain one or more optimum encoder hyper-parameters, wherein the one or more optimum encoder hyper-parameters serve as one or more corresponding embeddings;
apply a dimensionality reduction technique on the one or more corresponding embeddings to obtain a set of embeddings with reduced dimension;
apply a clustering technique on the set of embeddings to obtain a plurality of clusters, wherein one or more clusters from the plurality of clusters is assigned at least one cardinality, the cardinality is indicative of an operating status of the device over a time under consideration; and
generate at least one alert based on the at least one cardinality assigned to the one or more clusters of the plurality of clusters, and
comunicate the alert via a communication channel to an operator to acquire data from at least the one sensor for further processing and analysis.

8. The system of claim 7, wherein the one or more hyper parameters of the stacked auto-encoder are optimized by iteratively fine-tuning the one or more hyper parameters based on the windowed dataset such that a reconstruction error reaches a pre-defined threshold.

9. The system of claim 7, wherein the clustering technique is a density-based clustering technique.

10. The system of claim 8, wherein the at least one cardinality indicative of the operating status comprises one of a success, a failure, or a transition state.

11. The system of claim 10, wherein the transition state comprises a probability of a change in a first transition state to a second transition state that is different from the first transition state.

12. The system of claim 11, wherein the first transition state and the second transition state are one of a success state or a failure state at one or more time instances of the plurality of time instances.

13. A computer program product comprising a non-transitory computer readable medium having a computer readable program embodied therein, wherein the computer readable program, when executed on a computing device causes the computing device to detect abnormal behaviour of devices by obtaining unlabeled sensor observations pertaining to the devices by:
obtaining, via one or more hardware processors (104), a dataset comprising a first unlabeled sensor observation and a second unlabeled sensor observation from at least one sensor respectively, the at least one sensor is connected to a device (202) and the at least one sensor captures sensor observation pertaining to the device;
computing, via the one or more hardware processors (104), one or more key performance indicators (KPIs) based on a function of the first unlabeled sensor observation and the second unlabeled sensor observation comprised in the dataset to obtain a modified dataset, wherein the one or more key performance indicators are computed for a plurality of time instances of the first unlabeled sensor observation and the second unlabeled sensor observation (204);
applying, via the one or more hardware processors (104), a windowing technique on the modified dataset based on a transpose function implemented on the plurality of time instances of the first unlabeled sensor observation and the second unlabeled sensor observation comprised in the modified dataset to obtain a windowed dataset (206);
optimizing via the one or more hardware processors (104), using the windowed dataset, one or more hyper-parameters of a deep learning-based auto-encoder to obtain one or more optimum encoder hyper-parameters, wherein the one or more optimum encoder hyper-parameters serve as one or more corresponding embeddings (208);
applying, via the one or more hardware processors (104), a dimensionality reduction technique on the one or more corresponding embeddings to obtain a set of embeddings with reduced dimension (210);
applying via the one or more hardware processors (104), a clustering technique on the set of embeddings to obtain a plurality of clusters, wherein one or more clusters from the plurality of clusters is assigned at least one cardinality, the cardinality is indicative of an operating status of the device over a time under consideration (212); and
generating, via the one or more hardware processors, at least one alert based on the at least one cardinality assigned to the one or more clusters of the plurality of clusters, wherein the alert is communicated via a communication channel to an operator to acquire data from at least the one sensor for further processing and analysis.

## Patentansprüche

1. Prozessorimplementiertes Verfahren zum Erkennen von anormalem Verhalten von Vorrichtungen aus nicht gekennzeichneten Sensorbeobachtungen, die zu den Vorrichtungen gehören, umfassend:
Erhalten, über einen oder mehrere Hardwareprozessoren, eines Datensatzes, der eine erste unbeschriftete Sensorbeobachtung und eine zweite unbeschriftete Sensorbeobachtung von jeweils mindestens einem Sensor umfasst, wobei der mindestens eine Sensor mit einer Vorrichtung (202) verbunden ist und der mindestens eine Sensor eine Sensorbeobachtung erfasst, die zu der Vorrichtung gehört;
Berechnen, über den einen oder die mehreren Hardwareprozessoren, eines oder mehrerer Schlüsselleistungsindikatoren (KPIs) basierend auf einer Funktion der ersten unbeschrifteten Sensorbeobachtung und der zweiten unbeschrifteten Sensorbeobachtung, die im Datensatz enthalten sind, um einen modifizierten Datensatz zu erhalten, wobei der eine oder die mehreren Schlüsselleistungsindikatoren für eine Vielzahl von Zeitpunkten der ersten unbeschrifteten Sensorbeobachtung und der zweiten unbeschrifteten Sensorbeobachtung berechnet werden (204);
Anwenden, über den einen oder die mehreren Hardwareprozessoren, einer Fensterungstechnik auf den modifizierten Datensatz basierend auf einer Transpositionsfunktion, die auf der Vielzahl von Zeitpunkten der ersten unbeschrifteten Sensorbeobachtung und der zweiten unbeschrifteten Sensorbeobachtung implementiert ist, die im modifizierten Datensatz enthalten sind, um einen gefensterten Datensatz zu erhalten (206);
Optimieren, über den einen oder die mehreren Hardwareprozessoren, unter Verwendung des gefensterten Datensatzes, eines oder mehrerer Hyperparameter eines tieflernbasierten Autocodierers, um einen oder mehrere optimale Codiererhyperparameter zu erhalten, wobei der eine oder die mehreren optimalen Codiererhyperparameter als eine oder mehrere entsprechende Einbettungen dienen (208);
Anwenden, über den einen oder die mehreren Hardwareprozessoren, einer Dimensionalitätsreduktionstechnik auf die eine oder die mehreren entsprechenden Einbettungen, um einen Satz von Einbettungen mit reduzierter Dimension zu erhalten (210);
Anwenden, über den einen oder die mehreren Hardwareprozessoren, einer Clusterungstechnik auf den Satz von Einbettungen, um eine Mehrzahl von Clustern zu erhalten, wobei einem oder mehreren Clustern aus der Vielzahl von Clustern mindestens eine Kardinalität zugewiesen wird, wobei die Kardinalität einen Betriebsstatus des Geräts über eine betrachtete Zeit anzeigt (212); und
Erzeugen, über den einen oder die mehreren Hardwareprozessoren, mindestens einer Warnung basierend auf der mindestens einen Kardinalität, die dem einen oder den mehreren Clustern der Vielzahl von Clustern zugewiesen ist, wobei die Warnung über einen Kommunikationskanal an einen Bediener kommuniziert wird, um Daten von mindestens dem einen Sensor zur weiteren Verarbeitung und Analyse zu erfassen.

2. Prozessorimplementiertes Verfahren nach Anspruch 1, wobei der Schritt des Optimierens eines oder mehrerer Hyperparameter des gestapelten Autocodierers iteratives Feinabstimmen des einen oder der mehreren Hyperparameter basierend auf dem gefensterten Datensatz umfasst, sodass ein Rekonstruktionsfehler einen vordefinierten Schwellenwert erreicht.

3. Prozessorimplementiertes Verfahren nach Anspruch 1, wobei die Clustering-Technik eine dichtebasierte Clustering-Technik ist.

4. Prozessorimplementiertes Verfahren nach Anspruch 1, wobei die mindestens eine Kardinalität, die den Betriebsstatus anzeigt, eines von einem Erfolg, einem Ausfall oder einem Übergangszustand umfasst.

5. Prozessorimplementiertes Verfahren nach Anspruch 4, wobei der Übergangszustand eine Wahrscheinlichkeit einer Änderung in einem ersten Übergangszustand zu einem zweiten Übergangszustand umfasst, der sich vom ersten Übergangszustand unterscheidet.

6. Prozessorimplementiertes Verfahren nach Anspruch 5, wobei der erste Übergangszustand und der zweite Übergangszustand eines von einem Erfolgszustand oder einem Ausfallzustand zu einem oder mehreren Zeitpunkten der Vielzahl von Zeitpunkten sind.

7. System (100) zum Erkennen von anormalem Verhalten von Vorrichtungen aus nicht gekennzeichneten Sensorbeobachtungen, die zu den Vorrichtungen gehören, umfassend:
einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:
Erhalten eines Datensatzes, der eine erste unbeschriftete Sensorbeobachtung und eine zweite unbeschriftete Sensorbeobachtung von jeweils mindestens einem Sensor umfasst, wobei der mindestens eine Sensor mit einer Vorrichtung verbunden ist und der mindestens eine Sensor eine Sensorbeobachtung erfasst, die zu der Vorrichtung gehört;
Berechnen eines oder mehrerer Schlüsselleistungsindikatoren (KPIs) basierend auf einer Funktion der ersten unbeschrifteten Sensorbeobachtung und der zweiten unbeschrifteten Sensorbeobachtung, die im Datensatz enthalten sind, um einen modifizierten Datensatz zu erhalten, wobei der eine oder die mehreren Schlüsselleistungsindikatoren für eine Vielzahl von Zeitpunkten der ersten unbeschrifteten Sensorbeobachtung und der zweiten unbeschrifteten Sensorbeobachtung berechnet werden;
Anwenden einer Fensterungstechnik auf den modifizierten Datensatz basierend auf einer Transpositionsfunktion, die auf der Vielzahl von Zeitpunkten der ersten unbeschrifteten Sensorbeobachtung und der zweiten unbeschrifteten Sensorbeobachtung implementiert ist, die im modifizierten Datensatz enthalten sind, um einen gefensterten Datensatz zu erhalten;
Optimieren, unter Verwendung des gefensterten Datensatzes, eines oder mehrerer Hyperparameter eines tieflernbasierten Autocodierers, um einen oder mehrere optimale Codiererhyperparameter zu erhalten, wobei der eine oder die mehreren optimalen Codiererhyperparameter als eine oder mehrere entsprechende Einbettungen dienen;
Anwenden einer Dimensionalitätsreduktionstechnik auf die eine oder die mehreren entsprechenden Einbettungen, um einen Satz von Einbettungen mit reduzierter Dimension zu erhalten; und
Anwenden einer Clusterungstechnik auf den Satz von Einbettungen, um eine Mehrzahl von Clustern zu erhalten, wobei einem oder mehreren Clustern aus der Vielzahl von Clustern mindestens eine Kardinalität zugewiesen wird, wobei die Kardinalität einen Betriebsstatus des Geräts über eine betrachtete Zeit anzeigt; und
Erzeugen mindestens einer Warnung basierend auf der mindestens einen Kardinalität, die dem einen oder den mehreren Clustern der Vielzahl von Clustern zugewiesen ist, wobei die Warnung über einen Kommunikationskanal an einen Bediener kommuniziert wird, um Daten von mindestens dem einen Sensor zur weiteren Verarbeitung und Analyse zu erfassen.

8. System nach Anspruch 7, wobei der eine oder die mehreren Hyperparameter des gestapelten Autocodierers durch iteratives Feinabstimmen des einen oder der mehreren Hyperparameter basierend auf dem gefensterten Datensatz optimiert werden, sodass ein Rekonstruktionsfehler einen vordefinierten Schwellenwert erreicht.

9. System nach Anspruch 7, wobei die Clustering-Technik eine dichtebasierte Clustering-Technik ist.

10. System nach Anspruch 8, wobei die mindestens eine Kardinalität, die den Betriebsstatus anzeigt, eines von einem Erfolg, einem Ausfall oder einem Übergangszustand umfasst.

11. System nach Anspruch 10, wobei der Übergangszustand eine Wahrscheinlichkeit einer Änderung in einem ersten Übergangszustand zu einem zweiten Übergangszustand umfasst, der sich vom ersten Übergangszustand unterscheidet.

12. System nach Anspruch 11, wobei der erste Übergangszustand und der zweite Übergangszustand eines von einem Erfolgszustand oder einem Ausfallzustand zu einem oder mehreren Zeitpunkten der Vielzahl von Zeitpunkten sind.

13. Computerprogrammprodukt, umfassend ein nichtflüchtiges computerlesbares Medium mit einem darin enthaltenen computerlesbaren Programm, wobei das computerlesbare Programm, wenn es auf einer Rechenvorrichtung ausgeführt wird, die Rechenvorrichtung veranlasst, anormales Verhalten von Vorrichtungen durch Erhalten von nicht gekennzeichneten Sensorbeobachtungen, die zu den Vorrichtungen gehören, zu erkennen durch:
Erhalten, über einen oder mehrere Hardwareprozessoren (104), eines Datensatzes, der eine erste unbeschriftete Sensorbeobachtung und eine zweite unbeschriftete Sensorbeobachtung von jeweils mindestens einem Sensor umfasst, wobei der mindestens eine Sensor mit einer Vorrichtung (202) verbunden ist und der mindestens eine Sensor eine Sensorbeobachtung erfasst, die zu der Vorrichtung gehört;
Berechnen, über den einen oder die mehreren Hardwareprozessoren (104), eines oder mehrerer Schlüsselleistungsindikatoren (KPIs) basierend auf einer Funktion der ersten unbeschrifteten Sensorbeobachtung und der zweiten unbeschrifteten Sensorbeobachtung, die im Datensatz enthalten sind, um einen modifizierten Datensatz zu erhalten, wobei der eine oder die mehreren Schlüsselleistungsindikatoren für eine Vielzahl von Zeitpunkten der ersten unbeschrifteten Sensorbeobachtung und der zweiten unbeschrifteten Sensorbeobachtung berechnet werden (204);
Anwenden, über den einen oder die mehreren Hardwareprozessoren (104), einer Fensterungstechnik auf den modifizierten Datensatz basierend auf einer Transpositionsfunktion, die auf der Vielzahl von Zeitpunkten der ersten unbeschrifteten Sensorbeobachtung und der zweiten unbeschrifteten Sensorbeobachtung implementiert ist, die im modifizierten Datensatz enthalten sind, um einen gefensterten Datensatz zu erhalten (206);
Optimieren, über den einen oder die mehreren Hardwareprozessoren (104), unter Verwendung des gefensterten Datensatzes, eines oder mehrerer Hyperparameter eines tieflernbasierten Autocodierers, um einen oder mehrere optimale Codiererhyperparameter zu erhalten, wobei der eine oder die mehreren optimalen Codiererhyperparameter als eine oder mehrere entsprechende Einbettungen dienen (208);
Anwenden, über den einen oder die mehreren Hardwareprozessoren (104), einer Dimensionalitätsreduktionstechnik auf die eine oder die mehreren entsprechenden Einbettungen, um einen Satz von Einbettungen mit reduzierter Dimension zu erhalten (210);
Anwenden, über den einen oder die mehreren Hardwareprozessoren (104), einer Clusterungstechnik auf den Satz von Einbettungen, um eine Mehrzahl von Clustern zu erhalten, wobei einem oder mehreren Clustern aus der Vielzahl von Clustern mindestens eine Kardinalität zugewiesen wird, wobei die Kardinalität einen Betriebsstatus des Geräts über eine betrachtete Zeit anzeigt (212); und
Erzeugen, über den einen oder die mehreren Hardwareprozessoren, mindestens einer Warnung basierend auf der mindestens einen Kardinalität, die dem einen oder den mehreren Clustern der Vielzahl von Clustern zugewiesen ist, wobei die Warnung über einen Kommunikationskanal an einen Bediener kommuniziert wird, um Daten von mindestens dem einen Sensor zur weiteren Verarbeitung und Analyse zu erfassen.

## Revendications

1. Procédé mis en oeuvre par processeur pour détecter un comportement anormal de dispositifs à partir d'observations de capteurs non étiquetés se rapportant aux dispositifs, le procédé comprenant les étapes ci-dessous consistant à :
obtenir, par l'intermédiaire d'un ou plusieurs processeurs matériels, un ensemble de données comprenant une première observation de capteur non étiqueté et une deuxième observation de capteur non étiqueté provenant d'au moins un capteur, respectivement, dans lequel ledit au moins un capteur est connecté à un dispositif (202) et ledit au moins un capteur capture des observations de capteurs se rapportant au dispositif ;
calculer, par l'intermédiaire dudit un ou desdits plusieurs processeurs matériels, un ou plusieurs indicateurs clés de performance (KPI) sur la base d'une fonction de la première observation de capteur non étiqueté et de la deuxième observation de capteur non étiqueté comprises dans l'ensemble de données, afin d'obtenir un ensemble de données modifié, dans lequel ledit un ou lesdits plusieurs indicateurs clés de performance sont calculés pour une pluralité d'instances temporelles de la première observation de capteur non étiqueté et de la deuxième observation de capteur non étiqueté (204) ;
appliquer, par l'intermédiaire dudit un ou desdits plusieurs processeurs matériels, une technique de fenêtrage, sur l'ensemble de données modifié, sur la base d'une fonction de transposée mise en oeuvre sur la pluralité d'instances temporelles de la première observation de capteur non étiqueté et de la deuxième observation de capteur non étiqueté comprises dans l'ensemble de données modifié, afin d'obtenir un ensemble de données fenêtré (206) ;
optimiser, par l'intermédiaire dudit un ou desdits plusieurs processeurs matériels, en utilisant l'ensemble de données fenêtré, un ou plusieurs hyperparamètres d'un auto-encodeur basé sur l'apprentissage profond, en vue d'obtenir un ou plusieurs hyperparamètres d'encodeur optimaux, dans lequel ledit un ou lesdits plusieurs hyperparamètres d'encodeur optimaux font office d'une ou plusieurs intégrations correspondantes (208) ;
appliquer, par l'intermédiaire dudit un ou desdits plusieurs processeurs matériels, une technique de réduction de dimensionnalité sur ladite une ou lesdites plusieurs intégrations correspondantes, en vue d'obtenir un ensemble d'intégrations à dimension réduite (210) ;
appliquer, par l'intermédiaire dudit un ou desdits plusieurs processeurs matériels, une technique de regroupement sur l'ensemble d'intégrations, en vue d'obtenir une pluralité de groupes, dans lesquels un ou plusieurs groupes de la pluralité de groupes se voient affecter au moins une cardinalité, la cardinalité étant indicative d'un état de fonctionnement du dispositif sur un temps considéré (212) ; et
générer, par l'intermédiaire dudit un ou desdits plusieurs processeurs matériels, au moins une alerte, sur la base de ladite au moins une cardinalité affectée audit un ou auxdits plusieurs groupes de la pluralité de groupes, dans laquelle l'alerte est communiquée par l'intermédiaire d'un canal de communication, à un opérateur, afin d'acquérir des données à partir dudit au moins un capteur, à des fins de traitement et d'analyse ultérieurs.

2. Procédé mis en oeuvre par processeur selon la revendication 1, dans lequel l'étape d'optimisation d'un ou plusieurs hyperparamètres de l'auto-encodeur empilé comprend l'étape consistant à effectuer un réglage fin, de manière itérative, dudit un ou desdits plusieurs hyperparamètres, sur la base de l'ensemble de données fenêtré de sorte qu'une erreur de reconstruction atteint un seuil prédéfini.

3. Procédé mis en oeuvre par processeur selon la revendication 1, dans lequel la technique de regroupement est une technique de regroupement basée sur la densité.

4. Procédé mis en oeuvre par processeur selon la revendication 1, dans lequel ladite au moins une cardinalité indicative de l'état de fonctionnement comprend un état parmi un état de réussite, un état d'échec ou un état de transition.

5. Procédé mis en oeuvre par processeur selon la revendication 4, dans lequel l'état de transition comprend une probabilité de passage d'un premier état de transition à un deuxième état de transition qui est différent du premier état de transition.

6. Procédé mis en oeuvre par processeur selon la revendication 5, dans lequel le premier état de transition et le deuxième état de transition sont l'un parmi un état de réussite ou un état d'échec à une ou plusieurs instances temporelles de la pluralité d'instances temporelles.

7. Système (100) permettant de détecter un comportement anormal de dispositifs à partir d'observations de capteurs non étiquetés se rapportant aux dispositifs, comprenant :
une mémoire (102) stockant des instructions ;
une ou plusieurs interfaces de communication (106) ; et
un ou plusieurs processeurs matériels (104), couplés à la mémoire (102) par l'intermédiaire de ladite une ou desdites plusieurs interfaces de communication (106), dans lesquels ledit un ou lesdits plusieurs processeurs matériels (104) sont configurés, par les instructions, de manière à mettre en oeuvre les étapes ci-dessous consistant à :
obtenir un ensemble de données comprenant une première observation de capteur non étiqueté et une deuxième observation de capteur non étiqueté provenant d'au moins un capteur, respectivement, dans lequel ledit au moins un capteur est connecté à un dispositif et ledit au moins un capteur capture des observations de capteurs se rapportant au dispositif ;
calculer un ou plusieurs indicateurs clés de performance (KPI) sur la base d'une fonction de la première observation de capteur non étiqueté et de la deuxième observation de capteur non étiqueté comprises dans l'ensemble de données, afin d'obtenir un ensemble de données modifié, dans lequel ledit un ou lesdits plusieurs indicateurs clés de performance sont calculés pour une pluralité d'instances temporelles de la première observation de capteur non étiqueté et de la deuxième observation de capteur non étiqueté ;
appliquer une technique de fenêtrage, sur l'ensemble de données modifié, sur la base d'une fonction de transposée mise en oeuvre sur la pluralité d'instances temporelles de la première observation de capteur non étiqueté et de la deuxième observation de capteur non étiqueté comprises dans l'ensemble de données modifié, afin d'obtenir un ensemble de données fenêtré ;
optimiser, en utilisant l'ensemble de données fenêtré, un ou plusieurs hyperparamètres d'un auto-encodeur basé sur l'apprentissage profond, en vue d'obtenir un ou plusieurs hyperparamètres d'encodeur optimaux, dans lequel ledit un ou lesdits plusieurs hyperparamètres d'encodeur optimaux font office d'une ou plusieurs intégrations correspondantes ;
appliquer une technique de réduction de dimensionnalité sur ladite une ou lesdites plusieurs intégrations correspondantes, en vue d'obtenir un ensemble d'intégrations à dimension réduite ;
appliquer une technique de regroupement sur l'ensemble d'intégrations, en vue d'obtenir une pluralité de groupes, dans lesquels un ou plusieurs groupes de la pluralité de groupes se voient affecter au moins une cardinalité, la cardinalité étant indicative d'un état de fonctionnement du dispositif sur un temps considéré ; et
générer au moins une alerte, sur la base de ladite au moins une cardinalité affectée audit un ou auxdits plusieurs groupes de la pluralité de groupes, et communiquer l'alerte par l'intermédiaire d'un canal de communication, à un opérateur, afin d'acquérir des données à partir dudit au moins un capteur, à des fins de traitement et d'analyse ultérieurs.

8. Système selon la revendication 7, dans lequel ledit un ou lesdits plusieurs hyperparamètres de l'auto-encodeur empilé sont optimisés en effectuant un réglage fin, de manière itérative, dudit un ou desdits plusieurs hyperparamètres, sur la base de l'ensemble de données fenêtré, de sorte qu'une erreur de reconstruction atteint un seuil prédéfini.

9. Système selon la revendication 7, dans lequel la technique de regroupement est une technique de regroupement basée sur la densité.

10. Système selon la revendication 8, dans lequel ladite au moins une cardinalité indicative de l'état de fonctionnement comprend un état parmi un état de réussite, un état d'échec ou un état de transition.

11. Système selon la revendication 10, dans lequel l'état de transition comprend une probabilité de passage d'un premier état de transition à un deuxième état de transition qui est différent du premier état de transition.

12. Système selon la revendication 11, dans lequel le premier état de transition et le deuxième état de transition sont l'un parmi un état de réussite ou un état d'échec à une ou plusieurs instances temporelles de la pluralité d'instances temporelles.

13. Produit-programme informatique comprenant un support non transitoire lisible par ordinateur dans lequel est incorporé un programme lisible par ordinateur, dans lequel le programme lisible par ordinateur, lorsqu'il est exécuté sur un dispositif informatique, amène le dispositif informatique à détecter un comportement anormal de dispositifs, en obtenant des observations de capteurs non étiquetés se rapportant aux dispositifs, en mettant en oeuvre les étapes ci-dessous consistant à :
obtenir, par l'intermédiaire d'un ou plusieurs processeurs matériels (104), un ensemble de données comprenant une première observation de capteur non étiqueté et une deuxième observation de capteur non étiqueté provenant d'au moins un capteur, respectivement, dans lequel ledit au moins un capteur est connecté à un dispositif (202) et ledit au moins un capteur capture des observations de capteurs se rapportant au dispositif ;
calculer, par l'intermédiaire dudit un ou desdits plusieurs processeurs matériels (104), un ou plusieurs indicateurs clés de performance (KPI) sur la base d'une fonction de la première observation de capteur non étiqueté et de la deuxième observation de capteur non étiqueté comprises dans l'ensemble de données, afin d'obtenir un ensemble de données modifié, dans lequel ledit un ou lesdits plusieurs indicateurs clés de performance sont calculés pour une pluralité d'instances temporelles de la première observation de capteur non étiqueté et de la deuxième observation de capteur non étiqueté (204) ;
appliquer, par l'intermédiaire dudit un ou desdits plusieurs processeurs matériels (104), une technique de fenêtrage, sur l'ensemble de données modifié, sur la base d'une fonction de transposée mise en oeuvre sur la pluralité d'instances temporelles de la première observation de capteur non étiqueté et de la deuxième observation de capteur non étiqueté comprises dans l'ensemble de données modifié, afin d'obtenir un ensemble de données fenêtré (206) ;
optimiser, par l'intermédiaire dudit un ou desdits plusieurs processeurs matériels (104), en utilisant l'ensemble de données fenêtré, un ou plusieurs hyperparamètres d'un auto-encodeur basé sur l'apprentissage profond, en vue d'obtenir un ou plusieurs hyperparamètres d'encodeur optimaux, dans lequel ledit un ou lesdits plusieurs hyperparamètres d'encodeur optimaux font office d'une ou plusieurs intégrations correspondantes (208) ;
appliquer, par l'intermédiaire dudit un ou desdits plusieurs processeurs matériels (104), une technique de réduction de dimensionnalité sur ladite une ou lesdites plusieurs intégrations correspondantes, en vue d'obtenir un ensemble d'intégrations à dimension réduite (210) ;
appliquer, par l'intermédiaire dudit un ou desdits plusieurs processeurs matériels (104), une technique de regroupement sur l'ensemble d'intégrations, en vue d'obtenir une pluralité de groupes, dans lesquels un ou plusieurs groupes de la pluralité de groupes se voient affecter au moins une cardinalité, la cardinalité étant indicative d'un état de fonctionnement du dispositif sur un temps considéré (212) ; et
générer, par l'intermédiaire dudit un ou desdits plusieurs processeurs matériels, au moins une alerte, sur la base de ladite au moins une cardinalité affectée audit un ou auxdits plusieurs groupes de la pluralité de groupes, dans laquelle l'alerte est communiquée par l'intermédiaire d'un canal de communication, à un opérateur, afin d'acquérir des données à partir dudit au moins un capteur, à des fins de traitement et d'analyse ultérieurs.
